# EUROPEAN PATENT SPECIFICATION

(11) **EP 1 504 546 B1**
(45) Date of publication and mention of the grant of the patent: **08.07.2009**
(21) Application number: 03723582.7
(22) Date of filing: 02.05.2003
(51) Int. Cl.: H04B 7/185, H04W 72/02

(54) **METHOD AND APPARATUS PROVIDING INFORMATION TRANSFER**
VERFAHREN UND VORRICHTUNG ZUM INFORMATIONSTRANSFER
PROCEDE ET DISPOSITIF PERMETTANT LE TRANSFERT DE DONNEES

(30) Priority: 06.05.2002 SE 0201404
(43) Date of publication of application: 09.02.2005
(73) Proprietor: Pilotfish Networks AB, 411 21 Goteborg (SE)
(72) Inventor: BERGANDER, Mattias, S-431 47 Mölndal (SE); LARSSON, Erik, S-411 20 Göteborg (SE)
(74) Representative: Bergentall, Annika Maria
(86) International application number: PCT/SE2003/000708
(87) International publication number: WO 2003/094388

(56) References cited:
- EP-A1- 1 130 799
- EP-A2- 1 028 545
- WO-A1-00/25477
- US-A- 5 732 359
- DATABASE WPI Week 199919, Derwent Publications Ltd., London, GB; Class W01, AN 1999-221787, XP002984058 & JP 11 055 717 A (NEC CORP.) 26 February 1999

## Description

### FIELD OF THE INVENTION

The present invention relates generally to a method and apparatus for providing information transfer between a mobile data unit and a central server. More specifically, the invention relates to a method and an apparatus which enables a data unit comprising at least two different communication means, the at least two communication means having an overlapping coverage/functionality in at least a part of a geographical area, in a predictable and predetermined manner to enable transfer of information with a central server.

### BACKGROUND TO THE INVENTION

Data collection has traditionally been comprised of one or more data collection units somehow connected with a central unit. Originally the connection between the data units and the central unit would probably have been by means of direct wiring if it concerned for example one industry or additionally by means of the public telephone network if it concerned more than one industry or an industry at a remote location from the central unit. Advancement in radio technology and perhaps more importantly the more readily availability of radio communication, mainly due to lower cost and relaxation of regulations, enabled the use of proprietary radio communication with local collection units. Remote locations would usually still require the use of the public telephone network as proprietary radio communication systems would only have a relatively limited coverage. With the arrival of nationwide wireless communication means, such as the arrival of mobile telephone networks, remote locations could also be accessed by means of radio communication. The use of public wireless communication means has opened up the realistic use of data collection units on for example mobile machinery, such as trucks. Unfortunately wireless communication systems that cross country borders, such as satellite systems, are relatively costly, prohibiting a more widespread regional/global use, such as for example having data collection units on boats and even more so on cargo that is mobile in a large geographical area which is not restricted by national borders. At the same time, it has become more and more interesting to be able to keep track of and know the condition of for example a container, i.e. to know its whereabouts and for example its internal and external temperature and relative humidity. To know a mobile unit's whereabouts is an important factor in logistics, which has become more and more important, especially when companies use/are subjected to just-in-time transports. It would thus be desirable, in a large geographical area, to be able to use data units mounted on mobile carriers such as boats, trucks, and containers, and provide cost efficient information transfer with a central unit.

The document US 5732359 describes a dual terminal compatible with a terrestrial cellular network and a satellite network. The network selection is based on the network availability and on user defined modes such as "satellite only", "satellite priority", "cellular priority", etc.

### SUMMARY OF THE INVENTION

An object of the invention is to provide a mobile data unit capable of providing in a large geographical area a cost efficient information transfer with a central server.

A further object of the invention is to provide a method of providing information transfer from at least one data unit to a central server, by means of one of at least two different communication means of the data unit, in a controllable manner.

Another object of the invention is to provide a system capable of providing information transfer between a mobile data unit and a central server by means of one of at least two different communication means of the data unit, in a controllable and efficient manner.

The aforementioned objects are achieved according to the invention by a method and a system of providing information transfer between at least one data unit and a central server as defined by independent claims 1,19,27,30. Further embodiment are described by the dependent claims. A data unit in an area within which at least partly two different communication means have an overlapping coverage, transfer information with the central server by means of one of these communication means. Selection of one of the communication means is done from a plurality of parameters governed by a data unit profile. The central server in turn will in most applications be interconnected to one or more users and their applications by means of a further communication network, such as the internet. A user will thus communicate with the central server by means of a single communication network and method even though several different communication networks and methods are used for information transfer to and from the data unit or units.

A further embodiment includes a method of providing information transfer from at least one data unit to a central server. The data unit comprises at least two different communication means. The at least two communication means have an overlapping coverage/functionality in at least a part of a geographical area in which the data unit is located. According to the invention the method comprises a plurality of steps in each data unit. In a first step the at least two communication means are initiated. In a second step a preferred communication means is determined. In a third step an availability of the communication means is determined. In a fourth step a current communication means is selected from one of the at least two communication means. The selection is done in dependence of the determined preferred communication means, and the availability of the communication means. Finally in a fifth step information transfer is provided to the central server by means of the current communication means.

The method can further suitably comprise the step of the central server providing information transfer to at least one application of a terminal of a subscriber by means of a further communication network. Suitably the method further comprises the step of classifying a type of information transfer, and that in the step of selecting a current communication means, selecting is also done in dependence of the classification of the type of information transfer to be provided. Then suitably in the step of determining an availability of the communication means, determining is also done in dependence of the classification of the type of information transfer to be provided. In some implementations the step of classifying a type of information transfer comprises the substep of determining a maximum allowable delay before information transfer is provided. Then suitably the step of determining an availability of the communication means can comprise the substeps of determining currently unfunctional communication means, and predicting which of the currently unfunctional communication means will be functional communication means within the determined maximum allowable delay of the classified type of information transfer to be provided. In some implementations the step of classifying a type of information transfer further comprises the substep of determining an amount of information to be transferred. Then suitably the step of determining an availability of the communication means comprises the substep of determining if the communication means is compatible with the determined amount of information to be transferred. Suitably the step of determining a preferred communication means, also determines in dependence of the classification of the type of information transfer to be provided.

In some implementations the step of initiating the at least two communication means further comprises the substeps of initialising the communication means hardware, activating a default data unit profile, and requesting an information transfer of a current data unit profile. The step of determining an availability of the communication means can comprise the substeps of determining allowable communication means, and determining functional communication means. Sometimes the substep of determining functional communication means comprises the additional substeps of determining currently functional communication means, and predicting probable time of continued functionality of currently functional communication means. Suitably the substep of determining functional communication means comprises the additional substeps of determining currently unfunctional communication means, and predicting probable time to functionality of currently unfunctional communication means.

In some implementations, in the step of determining a preferred communication means, determining is also done in dependence of an amount of information transfer to be provided. In the step of determining a preferred communication means, determining can also be done in dependence of a cost of providing information transfer by means of each of the at least two communication means, and/or in dependence of an information transfer rate of each of the at least two communication means, and/or in dependence of a time of the data unit, and/or in dependence of a time of the central server. Certain communication networks are cheaper to use during weekends and/or outside of business hours, and the time, i.e. time of day and/or day of the week, thus becomes important.

One or more of the features of the above-described different methods according to the invention can be combined in any desired manner, as long as the features are not contradictory.

A further embodiment includes a data unit arranged to provide information transfer to a central server. The data unit comprises at least two different communication means. The at least two communication means have an overlapping coverage/functionality in at least a part of a geographical area in which the data unit is located. The data unit comprises an initiation means, a first determination means, a second determination means, a selection means and a providing means. The initiation means is arranged to initiate the at least two communication means. The first determination means arranged to determine a preferred communication means. The second determination means is arranged to determine an availability of the communication means. The selection means is arranged to select a current communication means from one of the at least two communication means, in dependence of: the determined preferred communication means, and the availability of the communication means. The providing means is arranged to provide information transfer to the central server by means of the current communication means.

In some embodiments the data unit further comprises a classification means arranged to classify a type of information transfer. Suitably the selection means is then also arranged to select in dependence of the classification of the type of information transfer to be provided. Sometimes the classification means is arranged to determine a maximum allowable delay before information transfer is provided, and/or determine an amount of information to be transferred. The second determination means can in some embodiments be arranged to also determine in dependence of the classification of the type of information transfer to be provided. Suitably the first determination means is also arranged to determine a preferred communication means in dependence of the classification of the type of information transfer to be provided.

In some embodiments the initiation means is arranged to initialise the communication means hardware, activate a default data unit profile, and request an information transfer of a current data unit profile. The request of a current data unit profile can be made to a central server to which the data unit is to be associated, or to a default place, such as an internet location, which will, based on the identity of the data unit in question, provide the data unit with information of its central server to which it is to be associated with. Suitably the second determination means is arranged to determine allowable communication means, and determine functional communication means. The first determination means can be arranged to determine a preferred communication means in dependence of one or more of: an amount of information transfer to be provided; a cost of providing information transfer by means of each of the at least two communication means; an information transfer rate of each of the at least two communication means; a time of the data unit; a time of the central server.

Different embodiments of the data unit according to the invention can also be reached according to additional features mentioned above in connection with the description of the method according to the invention. The features of the above-described different embodiments of a data unit according to the invention can be combined in any desired manner, as long as no conflict occurs.

A further embodiment includes an information transfer system arranged to provide information transfer between at least one data unit and a central server. The central server and at least one of the at least one data unit each comprise at least two different communication means for communication with each other. The at least two communication means having an overlapping coverage/functionality in at least a part of a geographical area in which the at least one of the at least one data unit is located. The at least one of the at least one data unit comprises an initiation means, a first determination means, a second determination means, a selection means and a providing means. The initiation means is arranged to initiate the at least two communication means. The first determination means is arranged to determine a preferred communication means. The second determination means is arranged to determine an availability of the communication means.

The selection means is arranged to select a current communication means from one of the at least two communication means, in dependence of: the determined preferred communication means, and the availability of the communication means. The providing means is arranged to provide information transfer to the central server by means of the current communication means. Further according to the invention the central server comprises an initiation means, a first determination means, a second determination means, a selection means and a providing means. The initiation means is arranged to initiate the at least two communication means. The first determination means is arranged to determine a preferred communication means. The second determination means is arranged to determine an availability of the communication means. The selection means is arranged to select a current communication means from one of the at least two communication means, in dependence of: the determined preferred communication means, and the availability of the communication means. The providing means arranged to provide information transfer to the at least one of the at least one data unit by means of the current communication means.

Different embodiments of the information transfer system according to the invention can also be reached according to additional features mentioned above in connection with the description of the method or the data unit according to the invention. These different features can be combined with the data unit and/or the central server of the above-described information transfer system in any desired manner according to the invention, as long as no conflict occurs.

A further embodiment includes a method of providing information transfer from a central server to at least one data unit. The central server comprises at least two different communication means. The at least two communication means have an overlapping coverage/functionality in at least a part of a geographical area in which the at least one data unit is located. According to the invention the method comprises a plurality of steps in the central server. In a first step the at least two communication means are initiated. In a second step a preferred communication means is determed. In a third step an availability of the communication means is determined. In a fourth step a current communication means is selected from one of the at least two communication means, in dependence of: the determined preferred communication means, and the availability of the communication means. Finally in a fifth step the information transfer is provided to the at least one data unit by means of the current communication means.

In some versions the method further comprises the step of the central server providing information transfer from at least one application of a terminal of a subscriber by means of a further communication network. Advantageously the method further comprises the step of classifying a type of information transfer, in which case in the step of selecting a current communication means, selecting is also done in dependence of the classification of the type of information transfer to be provided. In some versions the method further comprises three additional steps. In a first additional step data unit profile parameters are compared with current parameters. Maybe there are new information transfer rates for one or more communication networks. In a second additional step it is determined if one or more data unit profile parameters needs to be updated. This can be the case if a subscriber can and wishes to change some operating conditions of one or more data units, for example only using the cheapest communication network, unless there is an emergency or time since last contact is more than, fore example ten days. And finally in a third additional step an information transfer of a data unit profile with current parameters to at least one data unit is requested if it is determined that one or more data unit profile parameters needs updating.

Different versions of the central server according to the invention can also be reached according to additional features mentioned above in connection with the description of the methods of the data unit according to the invention. The features of the above-described different versions of a central server according to the invention can be combined in any desired manner, as long as no conflict occurs.

A further embodiment includes a central server arranged to provide information transfer to at least one data unit. The central server comprises at least two different communication means. The at least two communication means have an overlapping coverage/functionality in at least a part of a geographical area in which the at least one data unit is located. According to the invention the central server comprises initiation means, first determination means, second determination means, selection means and providing means. The initiation means is arranged to initiate the at least two communication means. The first determination means is arranged to determine a preferred communication means. The second determination means is arranged to determine an availability of the communication means. The selection means is arranged to select a current communication means from one of the at least two communication means, in dependence of: the determined preferred communication means, and the availability of the communication means. The providing means is arranged to provide information transfer to the at least one data unit by means of the current communication means.

In some embodiments the central server further comprises classification means arranged to classify a type of information transfer, and the selection means is then also arranged to select in dependence of the classification of the type of information transfer to be provided. Advantageously the central server can further comprise comparator means, additional determining means and request means. The comparator means is arranged to compare data unit profile parameters with current parameters. The additional determining means is arranged to determine if one or more data unit profile parameters needs to be updated. And the request means is arranged to request an information transfer of a data unit profile with current parameters to at least one data unit if it is determined that one or more data unit profile parameters needs to be updated.

Different embodiments of the central server according to the invention can also be reached according to additional features mentioned above in connection with the description of the method or the data unit according to the invention. These different features can be combined with the above described central servers in any desired manner according to the invention, as long as no conflict occurs.

The invention provides many more advantages over prior art system, some more of which will be disclosed in further detail below.

### BRIEF DESCRIPTION OF THE DRAWINGS

The invention will now be more thoroughly described in more detail for explanatory, and in no sense limiting, purposes and features and advantages will become readily apparent by the following detailed description, where references will be made to the accompanying figures, where:
- Figure 1: illustrates a schematic overview of a system according to the invention;
- Figure 2: illustrates a schematic overview of a central server and its contact interface with its surroundings according to the invention;
- Figure 3: illustrates a flow chart of a basic method of a central server according to the invention;
- Figure 4: illustrates a flow chart of an additional feature of the method of a central server according to the invention;
- Figure 5: illustrates a schematic overview of a data unit and its contact interface with its surroundings according to the invention;
- Figure 6: illustrates a flow chart of a basic method of a data unit according to the invention;
- Figure 7: illustrates a flow chart of an enhanced method of a data unit according to the invention;
- Figure 8: illustrates a flow chart according to the invention of an example of an expansion of the step of determining an availability of the communication means, possibly an extension of figure 6 or 7.

### DETAILED DESCRIPTION

The invention deals with the problems associated with information transfer between a data unit and a central server. The data unit will typically either be mobile in a geographic area which is accessible at least in part by two different communication networks, such as GSM and SAT-C, or be stationary and then typically be located in a predetermined area between two different communication networks, the accessability of the different communication networks in the predetermined area being uncertain and perhaps depend on varying weather conditions. In either case, i.e. either with a mobile or a stationary data unit, access via a specific communication network will be unpredictable. Additionally, even if a specific communication network is accessible at all times, it might not be desirable to use that specific communication network, unless for example there is an emergency, this can for example be due to reasons of cost.

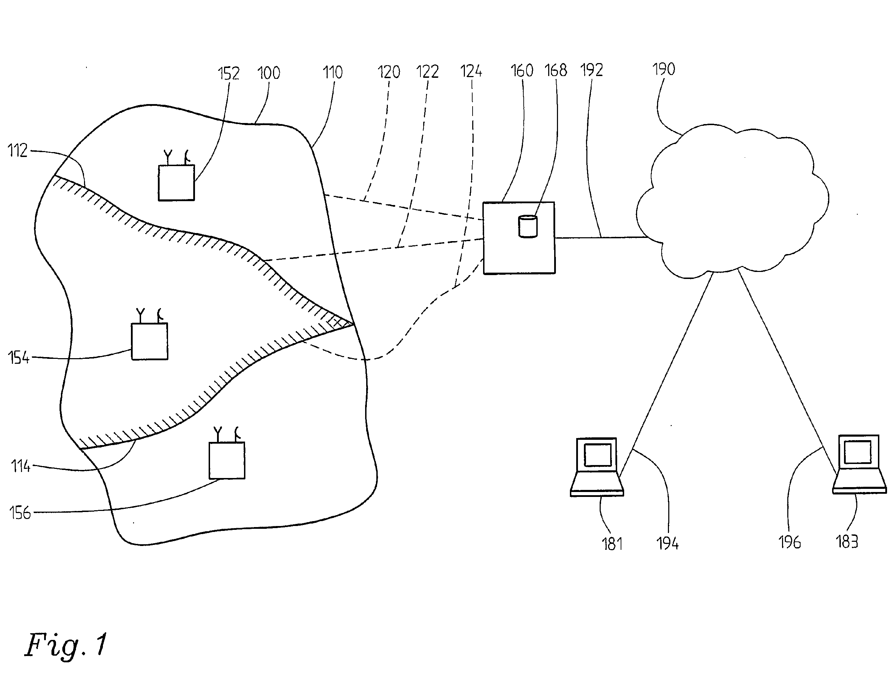

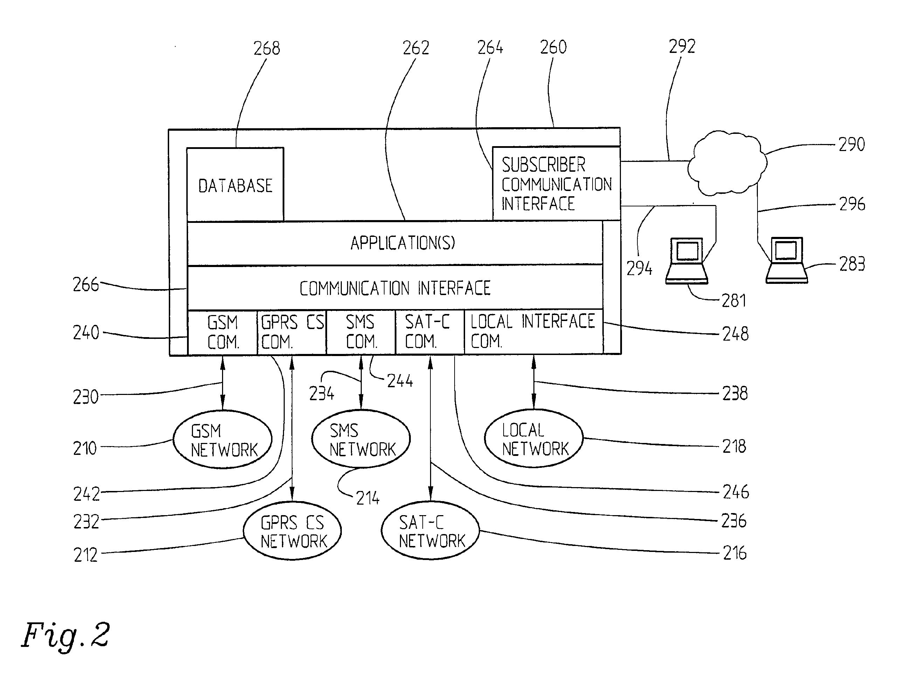

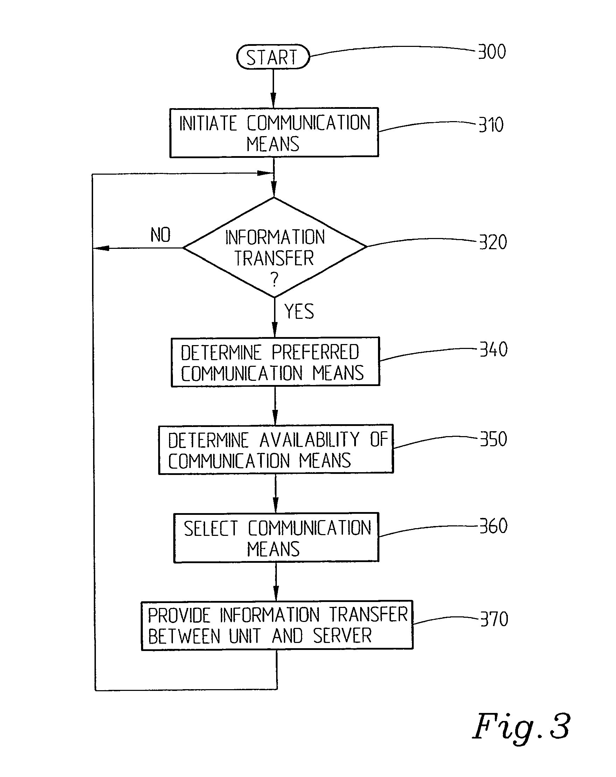

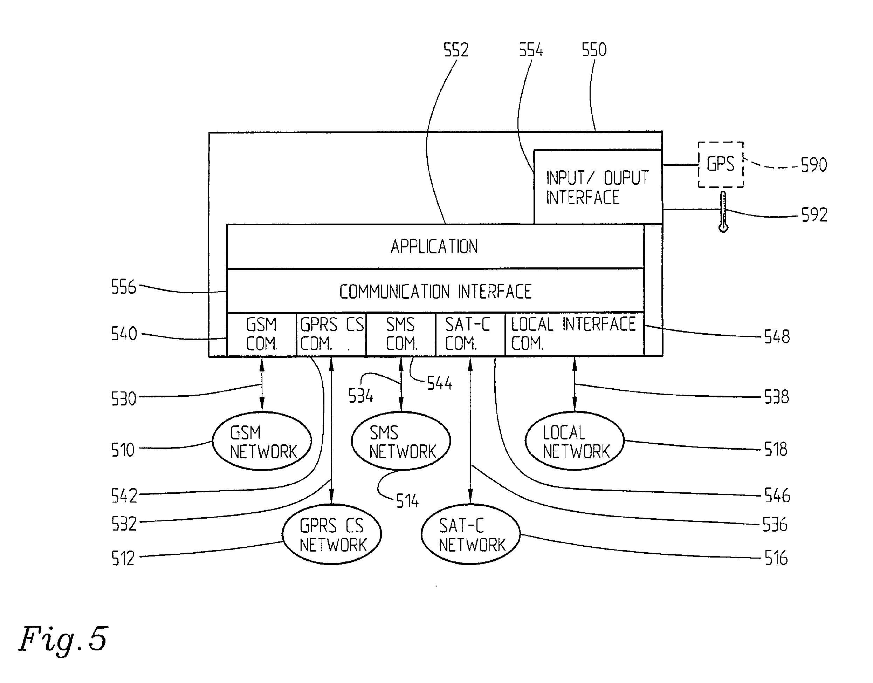

In order to clarify the method and the system according to the invention, some examples of its use will now be described in connection with figures 1 to 8. Figure 1 discloses a schematic overview of a system according to the invention. Figure 2 disclose a schematic overview of a central server and its contact interface with its surroundings according to the invention. Figure 5 disclose a schematic overview of a data unit and its contact interface with its surroundings according to the invention. Figures 3, 4, 6, 7 and 8 disclose different flow charts of methods of central servers and of data units according to the invention.

The schematic overview of a system according to the invention of figure 1, shows how one or more users via subscriber terminals 181, 183, in a simple uniform manner, can gain access to information attained from, or transfer information to, one or more data units 152, 154, 156 via a database 168 of a central server 160. A system according to the present invention can be owned by one part which then by contract allow subscribers to use the system in part or in full. It is also feasable that a system according to the present invention is owned and operated by the same part, the subscribers can then for example be different departments with different access rights. A split ownership is also possible, where the central server belongs to one part, which part allows, due to for example contracts, subscribers to gain access to their own data units. The central server 160 has, according to this example, access to three different communication networks 120, 122, 124, each with a different area coverage 110, 112, 114. A first communication network 120 of the three communication networks 120, 122, 124 has an area coverage 110 which corresponds to the complete geographic area 100 within which the first 152, second 154 and third 156 data units according to this system are designed to function. The other two communication networks 122, 124 only have a partial area coverage 112, 114 of the complete geographical area 100. The second communication network 122 has an area coverage 112 which covers the second 154 and third 156 data units' current locations, but not that of the first data unit 152. The third communication network 124 has an area coverage 114 which covers the first 152 and the second 154 data units' current location, but not that of the third data unit 154. The coverage areas 112, 114 of the second 122 and third 124 communication networks thus overlap at least partially in the geographical area 100 at hand. If the first communication network 120 was not present, then a situation with a minimum configuration according to the invention would prevail.

One or more users can get access to the data units 152, 154, 156 via subscriber terminals 181, 183 or the like. A subscriber terminal 181, 183 is typically coupled to a central server 160 by means of a large communication network 190, such as the internet, by communication access 192, 194, 196 by the subscriber terminal or terminals 181, 183 and by the central server 160 to this large communication network 190. Access to the data units 152, 154, 156, from the subscriber terminal's viewpoint, can be either direct, virtually direct or indirect, i.e. the central server 160 will either be transparent, virtually transparent by means of the data base 168, or act openly as a buffer by means of the database 168. In either case, information transfer to and from any data unit 152, 154, 156 will pass through the data base 168.

According to the invention, a user at a subscriber terminal 181, 183 can thus exchange information with one or more data units 152, 154, 156 by only either being connected 194, 196 to a network 190 that is in turn connected 192 to a central server 160, or being directly connected with a central server 160, without being concerned with what actual communication network 120, 122, 124 is being used for the information exchange. The choice of a communication network 120, 122, 124 for information exchange is subjected to many parameters. That a communication network 120, 122, 124 is physically present, is not the same as it being available for information transfer. Certain factors which are difficult to change immediately are for example that a specific communication network is non-functional, i.e. broken, that a data unit does not have any hardware/software for a specific communication network, or that a data unit is outside a coverage area of a specific communication network. Other factors, such as there not being a contract set up to allow the use of a specific communication network, can perhaps be easier and/or quicker to resolve in some cases, in other cases not. Further factors limiting the use of a communication network can be totally self inflicted, i.e. according to the invention that there is a profile governing the use of a communication network, such as only allowing the use of a certain communication network for information of a short length and/or of a very high priority.

Profiles are used to determine preferred communication networks, possibly depending on one or more parameters such as the size/length of the information transfer and its urgency, and transfer costs. Once a preferred communication network is determined, the availability of all the communication networks that are possible to use, is determined, possibly taking into account probable delay until availability and probable time of availability. A container that is shipped by boat will most likely reach a harbour within five days, for example, where SMS communication is possible, which would be desirable to wait for instead of using expensive satellite communication networks. The availability might also take into consideration the quality of the communication link that is possible to establish with a specific communication network. Other factors could be if a communication network is bidirectional or only usable in a single direction, and also which direction. A profile for information transfer can be in a data unit as a data unit profile and/or in the central server as a central server profile. A data unit will comprise a default data unit profile that will most likely be updated regularly from the central server, all depending on changed conditions, such as for example changed transfer costs or new contracts/subscriptions to be able to use additional communication networks. A SIM card can for example be inserted into a GSM communication module, making the use of that communication module available for use.

Figure 2 illustrates a schematic overview of a central server 260 and its contact interface with its surroundings according to the invention. One or more applications 262 of the central server 260 are coupled to a communication interface 266, a subscriber communication interface 264 and a database 268. The subscriber communication interface 264 will enable one or more subscriber terminals 281, 283 to either be in direct 294 contact with the central server 260, or be coupled 296, 292 via a communication network 290 such as the internet. The one or more applications 262 will also control and administer/manage all of the data units that are associated with the central server 260, for example which data units are initiated, which subscribers have paid for pull, i.e. central server initiated information retrieval from one or more data units since this is paid by the central server communication subscription, while on the other hand a push, i.e. a data unit initiated information transfer, is usually paid by a subscribers subscription to a communication service. The applications 262 will typically also perform statistics of for example amount of data trafic and how and by what subscriber/data unit, which among other things can be used for charging the subscribers. For example, a subscriber deposits a sum of money, either at a bank or by means of a credit card for example, which will then change the subscriber's general profile, to for example allow pull from the subscriber's data units and duplex communication with the data units. The applications 262 will then keep track of the amount of money still available on that subscriber's account, depending on the amount of use. The central server will check to see if any of the data unit profiles needs to be updated, and if so, does so autonomously.

The communication interface 266 is coupled to at least two communication modules 240, 242, 244, 246, 248, each of which can transfer information 230, 232, 234, 236, 238 between the communication interface and a corresponding communication network 210, 212, 214, 216, 218. In the example five different communication networks are illustrated. These different networks 210, 212, 214, 216, 218 represent communication networks with different coverage areas, different information transfer speeds, different information transfer costs, different information size transfer capabilities, different information transfer lag times, and different availabilities. For example, a GSM network could be overloaded and unable to accept any additional connections. Some communication networks are direct, while others buffers the information, store and forward mode, which will cause delays, lag times, which can be unacceptable for certain real time information, such as certain alarm conditions.

The application(s) 262 will control the central server 260 by making use of the communication interface 266 to thereby determine which communication module 240, 242, 244, 246, 248 is to be used for a specific information transfer. Figure 3 shows a flow chart of a basic method of how a central server would provide information transfer with a data unit in accordance with the invention. This is a polling type of information transfer. The flow chart does not take into consideration push type of information transfer from a data unit. The process is started in an initiation point 300. Thereafter in a first step 310 the communication means, i.e. the communication interface and the communication modules, are initiated. Initiation of the communication means will normally involve setting upp a default central server profile for determining a basic factory set functionality. This basic factory set functionality can either be changed wholly, in part or not at all by one or more of the subscribers by means of, for example, a subscriber terminal. Normally the central server profile will only be updated/changeable by the operator of the central server, normally in view of contracts made with subscribers. A central server profile will normally comprise a subscriber specific part for each individual subscriber, which specific part will reflect the contract with a subscriber in question. In some implementations a whole setup/system will be owned by a single user, in which case there might not be a need to have multiple subscriber specific parts. The default central server profile is used for the first information transfers between data units associated with the central server. Typically the default central server profile will assemble an information transfer request for new data unit profiles comprising some type of identity of the data units in question. The data units will receive new data unit profiles which typically, among other things, will reflect current operability.

After initiation, in a second step 320 it is determined if there is a reason for an information transfer or not between the central server and a data unit. If there is not, then the process will wait here until there is. Perhaps there is a push, in which case the central server just takes care of the information received and responds if called for, this case is not covered by this flow chart. A reason for a polling, that is the central server initiating contact with one or more data units, is that it might be cheaper for the central server to initiate the communication instead of the data unit initiating the communication, i.e depending on the communication rates, it can for example be cheaper to make a GSM call to the US from Sweden, than to make a GSM call to Sweden from the US. When there is a need for an information transfer, then the process continues with a third step 340, which determines a preferred communication means. A preferred communication means is determined from one or more parameters of the central server profile for the data unit or units in question. In some versions the central server profile will specify a determined preferred communication means, in other versions other parameters such as transfer cost will be used in a determination. Thereafter in a fourth step 350, the availability of the communication means is determined. A preferred communication means might not be available because the data unit or units in question are outside the coverage area of the preferred communication means. Other communication means might only be available between certain hours of the day. There are many factors which arise when determining the availability of the communication means, some versions of the invention will only take into account those that are immediately available for transmission, while other versions will calculate availability predictions for the different communication means, i.e. for how long will a communication means be available, will it be time enough to send the whole information via that communication means in that time, and how long will it be before a preferred communication means is available, the information transfer can perhaps wait until it is available? After the availability of the communication means has been determined, a fifth step 360 selects a current communication means based on the determined preferred communication means and the determined availability of the communication means. If a determined preferred communication means is determined available, then it becomes the current communication means, otherwise some of the other determined available communication means is selected according to the central server profile. Finally in a sixth step 370 the needed information, transfer between the central server and the data unit or units in question is provided.

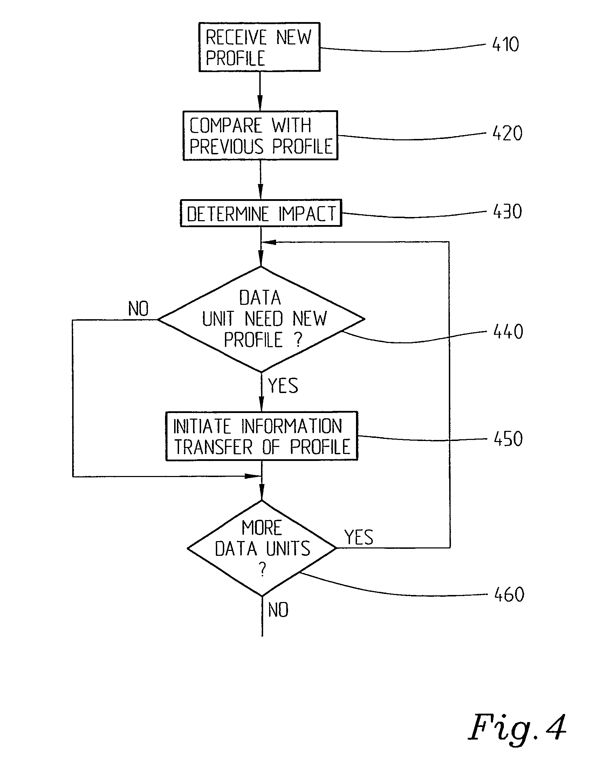

Figure 4 illustrates a flow chart of an additional feature of the method of a central server according to the invention. This feature provides subscribers with even greater ease of control of one or more data units by only having to update the central server with changed conditions and/or whole or part of one or more data unit profile, any necessary changes to specific or all data unit profiles then being changed by the central server. The central server will compare any changes with the current data unit profile or profiles, depending if changes concern one or more data unit profiles, or to determine if changes concern all or just one or a subset of the data unit profiles. According to the invention the process commences with a first step 410 where a new data unit profile is received, either from a subscriber or internally generated due to internal and/or external conditions. Internal conditions can be that one or more data unit profiles are to have their scheduled regular update. An external condition can be a changed transfer cost of a communication network. After the first step 410, a second step 420 compares the new data unit profile with a previous data unit profile. This is to establish what parameters are different. After the second step 420, a third step 430 determines the impact that the new data unit profile has in view of the comparison with the previous data unit profile and in view of the data units. Maybe only one data unit profile needs an update, since all other data units do not have access to a specific communication network that has a changed parameter. Then after the third step 430, a fourth step 440 determines if a specific data unit needs to be updated with the new data unit profile or not if there is no impact on that specific data unit in question. If a data unit profile is to be updated then in a fifth step 450 an information transfer of the new data unit profile to the data unit in question is requested. And finally in a sixth step 460 it is determined if there are more data units for which the new data unit profile could be taken into consideration, if not then this process is ended, otherwise it continues with the fourth step 440.

A schematic overview of a data unit 550 and its contact interface with its surroundings according to the invention is shown in figure 5. An application 552 of the data unit 550 is coupled to a communication interface 556 and an input/ouput interface 554. The input/output interface 554 is used for measurements, such as a temperature 592, for generating external stimuli, such as turning on/off indicator lamps, and for example for receiving locational information from a GPS receiver 590. Generation of external stimuli can be autonomously determined by the application 552 in view of received input and/or an internal/external status of for example the communication interface 556, one of the communication modules 540, 542, 544, 546, 548, and/or one of the communication networks 510, 512, 514, 516, 518. The generation of external stimuli can also be set by received information from the communication interface 556 or be determined by a combination of received information from the communication interface 556 and received input and/or an internal/external status/condition.

The communication interface 556 is coupled to at least two communication modules 540, 542, 544, 546, 548, each of which can transfer information 530, 532, 534, 536, 538 between the communication interface and a corresponding communication network 510, 512, 514, 516, 518. In the example five different communication networks are illustrated. These different networks 510, 512, 514, 516, 518 represent communication networks with different coverage areas, different information transfer speeds, different information transfer costs, different information size transfer capabilities, different information transfer lag times, and different availabilities. For example, a GSM network could be overloaded and unable to accept any additional connections. Some communication networks are direct, while others buffers the information, store and forward mode, which will cause delays, lag times, which can be unacceptable for certain real time information, such as certain alarm conditions.

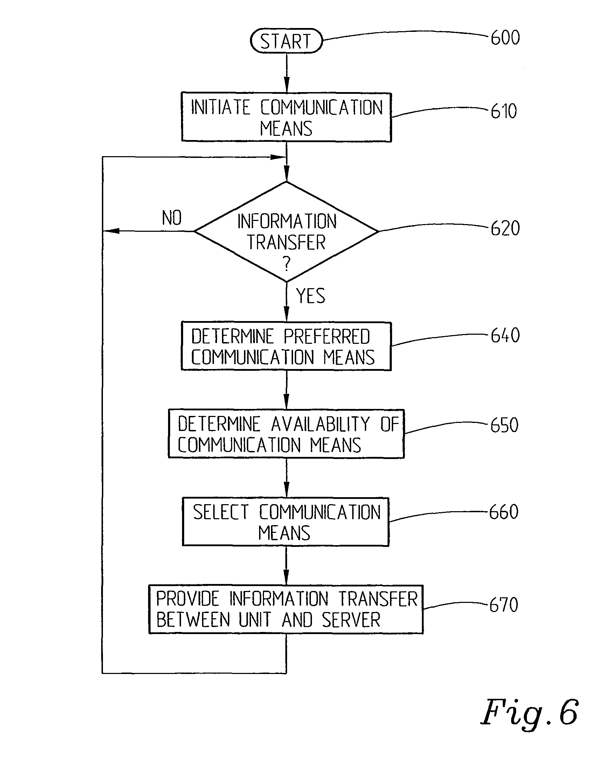

The application 552 will control the data unit 550 by making use of the communication interface 556 to thereby determine which communication module 540, 542, 544, 546, 548 is to be used for a specific information transfer. Figure 6 shows a flow chart of a basic method of how a data unit would provide information transfer according to the invention. The process is started in an initiation point 600. Thereafter in a first step 610 the communication means, i.e. the communication interface and the communication modules, are initiated. Initiation of the communication means will normally involve setting upp a default data unit profile for determining a basic factory set functionality, and at the same time requesting an information transfer of a new data unit profile from the central server or from elsewhere. The default data unit profile is used for these first information transfers between the data unit in question and the central server associated with it. Typically the default data unit profile will assemble a request for a new data unit profile comprising some type of identity of the data unit in question. This request will then typically be transferred to a default place on for example the internet. In response the data unit will receive a new data unit profile which among other things will then define a central server to be associated with it. In some versions according to the invention, the default data unit profile is preprogrammed with a central server and information on how to communicate with it. In some embodiments, a data unit will have a LCD interface panel, or an interface to a portable terminal, with which it is possible to either change and/or completely set up a profile for the data unit in question. Step by step help is provided to ease setting up or changing a profile.

After initiation, in a second step 620 it is determined if there is a reason for an information transfer or not between the data unit and a central server. If there is not, then the process will wait here until there is. This flow chart will only illustrate a push type information transfer, i.e. a data unit initiated information transfer. A polling type, when the information transfer is initiated by the central server, is not covered in this flow chart, but would basically involve the data unit opening the corresponding communication channel and receiving the information transferred, and responding as appropriate. When there is a need for an information transfer, then the process continues with a third step 640, which determines a preferred communication means. A preferred communication means is determined from one or more parameters of the data unit profile. In some versions the data unit profile will specify a determined preferred communication means, in other versions other parameters such as transfer cost will be used in a determination. Thereafter in a fourth step 650, the availability of the communication means is determined. A preferred communication means might not be available because the data unit is outside the coverage area of the preferred communication means. Other communication means might only be available between certain hours of the day. There are many factors which arise when determining the availability of the communication means, some versions of the invention will only take into account those that are immediately available for transmission, while other versions will calculate availability predictions for the different communication means, i.e. for how long will a communication means be available, will it be time enough to send the whole information via that communication means in that time, and how long will it be before a preferred communication means is available, the information transfer can perhaps wait until it is available? After the availability of the communication means has been determined, a fifth step 660 selects a current communication means based on the determined preferred communication means and the determined availability of the communication means. If a determined preferred communication means is determined available, then it becomes the current communication means, otherwise some of the other determined available communication means is selected according to the data unit profile. Finally in a sixth step 670 the needed information transfer between the data unit and the central server is provided.

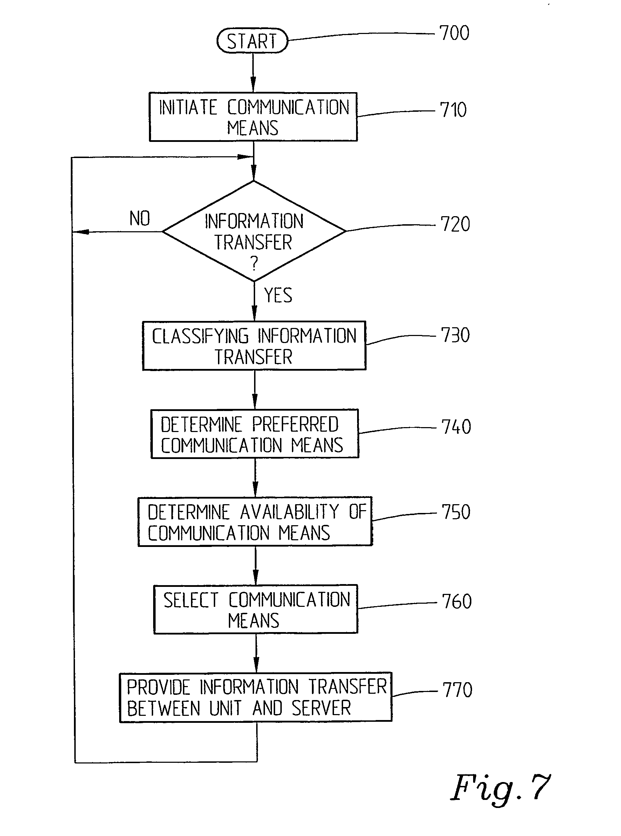

There are many ways in which the method according to the invention can be improved. Figure 7 shows a flow chart of an enhanced method of a data unit according to the invention. This enhanced process also comprises an initiation point 700, a first step 710 which initiates the communication means, and a second step 720, which determines if there is a reason for an information transfer or not between the data unit and a central server. In this enhanced method the process then continues with a third step 730, which classifies the information transfer. The classification can for example be a length of transfer and/or an urgency of transfer. Thereafter in a fourth step 740, a preferred communication means is determined, based at least on the classification of the information transfer. For example, a maximum acceptable latency of the information transfer might rule out one or more communication means/networks. Cost could or could not play a part, for example cost might be no objection up to a predetermined limit, i.e. for short messages an expensive communication means might be the best, since it is the fastest or is available in a larger area, while for longer messages, the most suitable communication means might be one that is not always available, but a wait for it might be acceptable since it is cheaper, within the limit. Then in a fifth step 750 it is determined an availability of the communication means. Thereafter in a sixth step 760 a current communication means is selected based on the determined preferred communication means and the determined availability of the communication means. And finally in a seventh step 770 the needed information transfer between the data unit and the central server is provided.

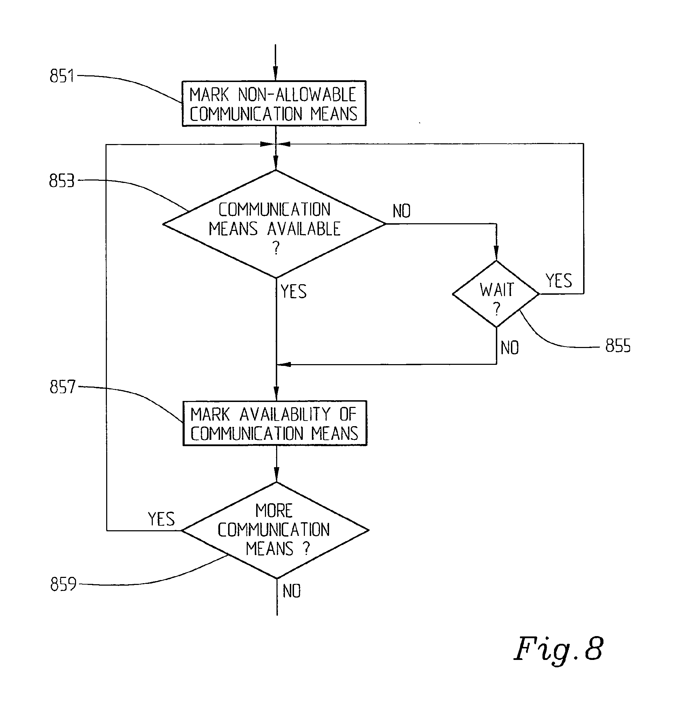

Other enhancements are possible and figure 8 shows a flow chart of an example of an expansion of the step 650, 750 of determining an availability of the communication means according to figure 6 or figure 7. In a first substep 851 non-allowable communication means are marked. Non allowable might be communication means for which there is no subscription. Thereafter in a second substep 853 it is determined if a communication means is available or not. Only the allowable communication means are determined for availability. If a communication means is not available then in a third substep 855 it is determined if the communication means should be awaited and if so for how long. An information transfer might not be very urgent and the profile indicates that in such cases a preferred communication means can be awaited for a predetermined amount of time. Suitably in such cases a probability of the communication means becomming available within the allowed time is calculated and used. If a communication means is to be awaited the process continues with the second substep 853. On the other hand if a communication means is not to be awaited for according to the third substep 855, or if a communication means according to the second substep 853 is available then the process continues with a fourth substep 857. The fourth substep 857 marks the availability and non-availability of a communication means. Preferably the communication means are marked with a calculated probability of time to availability and time of availability. Finally in a fifth substep 859 it is determined if there are more communication means that should have their availability determined, and in such a case to continue the process with the second substep 853 with another communication means.

The present invention can be put into apparatus-form either as pure hardware, as pure software or as a combination of hardware and software. If the method according to the invention is realized in the form of software, it can be completely independent or it can be one part of a larger program. The software can suitably be located in a general-purpose computer or in a dedicated computer.

As a summary, the invention can basically be described as a method and a system which provide means to enable transfer information between one or more data units and a central server by means of one of at least two different communication means. This is accomplished by the use of a profile which governs determination of a preferred communication means, the availability of the communication means and finally the selection of a current communication means to be used for the information transfer. The invention is not limited to the embodiments described above but may be varied within the scope of the appended patent claims.

### P82 PIPCT SPB

- FIG 1: a schematic overview of a system according to the invention,
100 geographic area within which a data unit desires information transfer,
110 area coverage of a first communication network,
112 area coverage of a second communication network,
114 area coverage of a third communication network,
120 central server access to first communication network,
122 central server access to second communication network,
124 central server access to second communication network,
152 a first data unit/ first location of a data unit,
154 a second data unit/ second location of the data unit,
156 a third data unit/ third location of the data unit,
160 central server with a database,
168 database of central server,
181 subscriber terminal,
183 subscriber terminal,
190 communication network such as the internet or the like,
192 communication with central server,
194 communication with subscriber terminal,
196 communication with subscriber terminal.
- FIG 2: a schematic overview of a central server and its contact interface with its surroundings according to the invention,
210 GSM network,
212 GPRS CS network,
214 SMS network,
216 SAT-C network,
218 Local network, such as WLAN,
230 central server information transfer via GSM network,
232 central server information transfer via GPRS CS network,
234 central server information transfer via SMS network,
236 central server information transfer via SAT-C network,
238 central server information transfer via Local network, such as WLAN,
240 central server GSM communication module,
242 central server GPRS CS communication module,
244 central server SMS communication module,
246 central server SAT-C communication module,
248 central server Local network, such as WLAN, communication module,
260 central server,
262 application(s),
264 subscriber communication interface module,
266 communication interface module,
268 database of central server,
281 subscriber terminal,
283 subscriber terminal,
290 communication network such as the internet or the like,
292 communication link to communication network for indirect communication with subscriber terminal,
294 direct communication with subscriber terminal,
296 indirect communication with subscriber terminal via a communication network.
- FIG 3: a flow chart of a basic method of a central server according to the invention,
300 initiation point,
310 320 a first step of initiating the communication means, from the first step, or from the sixth step, or no from the second step: a second step, which determines if there is a reason for an information transfer or not between the central server and a data unit,
340 yes from the second step: a third step, which determines a preferred communication means,
350 from the third step: a fourth step, which determines an availability of the communication means,
360 from the fourth step: a fifth step, which selects a current communication means based on the determined preferred communication means and the determined availability of the communication means,
370 from the fifth step: a sixth step, which provides the needed information transfer between the central server and the data unit.
- FIG 4: a flow chart of an additional feature of the method of a central server according to the invention,
410 a first step where a new data unit profile is received, either from a subscriber or internally generated due to internal and/or external conditions,
420 from the first step: a second step of comparing the new data unit profile with a previous data unit profile,
430 from the second step: a third step of determining the impact that the new data unit profile has in view of the comparison with the previous data unit profile and in view of the data units,
440 from the third step, or yes from the sixth step: a fourth step, which determines if a specific data unit needs to be updated with the new data unit profile or if there is no impact on that specific data unit,
450 yes from the fourth step: a fifth step initiating an information transfer of the new data unit profile to the data unit in question,
460 from the fifth step, or no from the fourth step: a sixth step, which determines there are more data units for which the new data unit profile could be taken into consideration, if not then this process is ended, otherwise it continues with the fourth step.
- FIG 5: a schematic overview of a data unit and its contact interface with its surroundings according to the invention,
510 GSM network,
512 GPRS CS network,
514 SMS network,
516 SAT-C network,
518 Local network, such as WLAN,
530 data unit information transfer via GSM network,
532 data unit information transfer via GPRS CS network,
534 data unit information transfer via SMS network,
536 data unit information transfer via SAT-C network,
538 data unit information transfer via Local network, such as WLAN,
540 data unit GSM communication module,
542 data unit GPRS CS communication module,
544 data unit SMS communication module,
546 data unit SAT-C communication module,
548 data unit Local network, such as WLAN, communication module,
550 data unit,
552 application,
554 input/output interface module,
556 communication interface module,
590 GPS module,
592 data retrieval/measurement module, such as a thermometer.
- FIG 6: a flow chart of a basic method of a data unit according to the invention,
600 initiation point,
610 a first step of initiating the communication means,
620 from the first step, or from the sixth step, or no from the second step: a second step, which determines if there is a reason for an information transfer or not between the data unit and a central server,
640 yes from the second step: a third step, which determines a preferred communication means,
650 from the third step: a fourth step, which determines an availability of the communication means,
660 from the fourth step: a fifth step, which selects a current communication means based on the determined preferred communication means and the determined availability of the communication means,
670 from the fifth step: a sixth step, which provides the needed information transfer between the data unit and the central server.
- FIG 7: a flow chart of an enhanced method of a data unit according to the invention,
700 initiation point,
710 a first step of initiating the communication means,
720 from the first step, or from the sixth step, or no from the second step: a second step, which determines if there is a reason for an information transfer or not between the data unit and a central server,
730 yes from the second step: a third step, which classifies the information transfer,
740 from the third step: a fourth step, which determines a preferred communication means based on the classification of the information transfer,
750 from the fourth step: a fifth step, which determines an availability of the communication means,
760 from the fifth step: a sixth step, which selects a current communication means based on the determined preferred communication means and the determined availability of the communication means,
770 from the sixth step: a seventh step, which provides the needed information transfer between the data unit and the central server.
- FIG 8: a flow chart of an example of an expansion of the step of determining an availability of the communication means,
851 a first substep which marks non-allowable communication means,
853 from the first substep, yes from a third substep, or yes from a fifth substep: a second substep, which determines if a communication means is available or not,
855 no from the second substep: a third substep, which determines if a communication means is unavailable, if it should be awaited and if so for how long,
857 yes from the second substep or no from the third substep: a fourth substep, which marks the availability of a communication means,
859 from the fourth substep: a fifth substep, in which it is determined if there are more communication means that should have their availability determined.

## Claims

1. A method of providing information transfer from at least once data unit (152, 154, 156; 550) to a central server (160, 260), said at least one data unit (152, 154, 156; 550) being mounted on a mobile carrier and comprising an input/output interface (554) at least for local data collection of measured values such as position and/or condition for said information transfer, the data unit (152, 154, 156; 550) further comprising at least two different communication means, the at least two communication means having an overlapping availability in at least a part of a geographical area in which the at least one data unit (152, 154, 156; 550) is located, **characterized in that** the method comprises the following steps in each data unit (152, 154, 156; 550) :
- initiating the at least two communication means;
- determining a preferred communication means;
- determining an availability of the communication means;
- selecting a current communication means from one of the at least two communication means, in dependence of: the determined preferred communication means, and the availability of the communication means;
- providing information transfer to the central server (160, 260) by means of the current communication means;
- classifying a type of information transfer; and in the step of selecting a current communication means, selecting is also done in dependence of the classification of the type of information transfer to be provided.

2. The method according to claim 1, **characterized in that** said input/output interface further is used for generating external stimuli.

3. The method according to claim 1 or 2, **characterized**
**in that** the method further comprises the step of:
- the central server providing information transfer to at least one application of a terminal of a subscriber by means of a further communication network.

4. The method according to claim 3, **characterized in that** in the step of determining an availability of the communication means, determining is also done in dependence of the classification of the type of information transfer to be provided.

5. The method according to any one of claims 1 to 4, **characterized in that** the step of classifying a type of information transfer comprises the substep of:
- determining a maximum allowable delay before information transfer is provided.

6. The method according to claim 5, **characterized in that** the step of determining an availability of the communication means comprises the substeps of:
- determining currently unfunctional communication means;
- predicting which of the currently unfunctional communication means will be functional communication means within the determined maximum allowable delay of the classified type of information transfer to be provided.

7. The method according to any one of claims 1 to 6, **characterized in that** the step of classifying a type of information transfer comprises the substep of:
- determining an amount of information to be transferred.

8. The method according to claim 7, **characterized in that** the step of determining an availability of the communication means comprises the substep of:
- determining if the communication means is compatible with the determined amount of information to be transferred.

9. The method according to any one of claims 1 to 8, **characterized in that** in the step of determining a preferred communication means, determining is also done in dependence of the classification of the type of information transfer to be provided.

10. The method according to any one of claims 1-9, **characterized in that** the step of initiating the at least two communication means comprises the substeps of:
- initializing the communication means hardware;
- activating a default data unit profile;
- requesting an information transfer of a current data unit profile.

11. The method according to any one of claims 1-10, **characterized in that** the step of determining an availability of the communication means comprises the substeps of:
- determining allowable communication means;
- determining functional communication means.

12. The method according to claim 11, **characterized in that** the substep of determining functional communication means comprises the substeps of:
- determining currently functional communication means;
- predicting probable time of continued functionality of currently functional communication means.

13. The method according to any one of claims 11-12, **characterized in that** the substep of determining functional communication means comprises the substeps of:
- determining currently unfunctional communication means;
- predicting probable time to functionality of currently unfunctional communication means.

14. The method according to any one of claims 1-13, **characterized in that** in the step of determining a preferred communication means, determining is also done in dependence of an amount of information transfer to be provided.

15. The method according to any one of claims 1-14, **characterized in that** in the step of determining a preferred communication means, determining is also done in dependence of a cost of providing information transfer by means of each of the at least two communication means.

16. The method according to any one of claims 1-15, **characterized in that** in the step of determining a preferred communication means, determining is also done in dependence of an information transfer rate of each of the at least two communication means.

17. The method according to any one of claims 1-16, **characterized in that** in the step of determining a preferred communication means, determining is also done in dependence of a time of the respective data units.

18. The method according to any one of claims 1-17, **characterized in that** in the step of determining a preferred communication means, determining is also done in dependence of a time of the central server.

19. A data collecting or providing unit for mounting on a mobile carrier arranged to provide information transfer to a central server (160, 260), said data unit (152, 154, 156; 550) comprising an input/output interface (554) at least for local data collection of measured values such as position and/or condition for said information transfer, the data unit (152, 154, 156; 550) further comprising at least two different communication means, the at least two communication means having an overlapping availability in at least a part of a geographical area in which the data unit (152, 154, 156; 550) is located, **characterized in that** the data unit (152, 154, 156; 550) comprises:
- initiation means arranged to initiate the at least two communication means;
- first determination means arranged to determine a preferred communication means;
- second determination means arranged to determine an availability of the communication means;
- selection means arranged to select a current communication means from one of the at least two communication means, in dependence of: the determined preferred communication means, and the availability of the communication means;
- providing means arranged to provide information transfer to the central server (160, 260) by means of the current communication means;
- classification means arranged to classify a type of information transfer;
and **in that** the selection means is also arranged to select in dependence of the classification of the type of information transfer to be provided.

20. The data unit according to claim 19, **characterized in that** said input/output interface further is used for generating external stimuli.

21. The data unit according to anyone of claim 19 or 20, **characterized in that** the classification means is arranged to determine a maximum allowable delay before information transfer is provided, and/or determine an amount of information to be transferred.

22. The data unit according to claim 19-21, **characterized in that** in the second determination means, the determining is also done in dependence of the classification of the type of information transfer to be provided.

23. The data unit according to any one of claim 19-22, **characterized in that** the first determination means is also arranged to determine a preferred communication means in dependence of the classification of the type of information transfer to be provided.

24. The data unit according to any one of claims 19-23, **characterized in that** the initiation means is arranged to initialize the communication means hardware, activate a default data unit profile, and request an information transfer of a current data unit profile.

25. The data unit according to any one of claims 19-24, **characterized in that** the second determination means is arranged to determine allowable communication means, and determine functional communication means.

26. The data unit according to any one of claims 19-25, **characterized in that** the first determination means is arranged to determine a preferred communication means in dependence of one or more of: an amount of information transfer to be provided; a cost of providing information transfer by means of each of the at least two communication means; an information transfer rate of each of the at least two communication means; a time of the data unit; a time of the central server.

27. A method of providing information transfer from a central server (160, 260) to at least one data unit (152, 154, 156; 550) , said at least one data unit (152, 154, 156; 550) being mounted on a mobile carrier and comprising an input/output interface (554) at least for local data collection of measured values such as position and/or condition for said information transfer, the central server (160, 260) comprising at least two different communication means, the at least two communication means having an overlapping availability in at least a part of a geographical area in which the at least one data unit (152, 154, 156; 550) is located, **characterized in that** the method comprises the following steps in the central server (160, 260):
- initiating the at least two communication means;
- determining a preferred communication means;
- determining an availability of the communication means;
- selecting a current communication means from one of the at least two communication means, in dependence of: the determined preferred communication means, and the availability of the communication means;
- providing information transfer to the at least one data unit (152, 154, 156; 550) by means of the current communication means;
- classifying a type of information transfer;
and **in that** in the step of selecting a current communication means, selecting is also done in dependence of the classification of the type of information transfer to be provided.

28. The method according to claim 27, **characterized in that** the method further comprises the step of:
- the central server providing information transfer from at least one application of a terminal of a subscriber by means of a further communication network.

29. The method according to any one of claims 27-28, **characterized in that** the method further comprises the steps of:
- comparing data unit profile parameters with current parameters;
- determining if one or more data unit profile parameters needs to be updated;
- if it is determined that one or more data unit profile parameters needs updating then requesting an information transfer of a data unit profile with current parameters to at least one data unit.

30. A central server (160, 260) arranged to provide information transfer to at least one data unit (152, 154, 156; 550) , said at least one data unit (152, 154, 156; 550) being mounted on a mobile carrier and comprising an input/output interface (554) at least for local data collection of measured values such as position and/or condition, the central server (160, 260) comprising at least two different communication means, the at least two communication means having an overlapping availability in at least a part of a geographical area in which the at least one data unit (152, 154, 156; 550) is located, **characterized in that** and **in that** the central server (160, 260) comprises:
- initiation means arranged to initiate the at least two communication means;
- first determination means arranged to determine a preferred communication means;
- second determination means arranged to determine an availability of the communication means;
- selection means arranged to select a current communication means from one of the at least two communication means, in dependence of: the determined preferred communication means, and the availability of the communication means;
- providing means arranged to provide information transfer to the at least one data unit (152, 154, 156; 550) by means of the current communication means
- classification means arranged to classify a type of information transfer;
and **in that** the selection means is also arranged to select in dependence of the classification of the type of information transfer to be provided.

31. The central server according to claim 30, **characterized in that** the central server further comprises:
- comparator means arranged to compare data unit profile parameters with current parameters;
- determining means arranged to determine if one or more data unit profile parameters needs to be updated;
- request means arranged to request an information transfer of a data unit profile with current parameters to at least one data unit if it is determined that one or more data unit profile parameters needs to be updated.

32. An information transfer system including the data unit as defined by the claims 19-26 and a central server as defined by the claims 30-31.

## Patentansprüche

1. Verfahren zum Bereitstellen eines Informationstransfers von mindestens einer Dateneinheit (152, 154, 156; 550) zu einem zentralen Server (160, 260), wobei die mindestens eine Dateneinheit (152, 154, 156; 550) an einem mobilen Träger angebracht ist und eine Eingabe/Ausgabeschnittstelle (554) zumindest für eine lokale Datenerfassung von gemessenen Werten, wie beispielsweise Position und/oder Zustand, für den Informationstransfer umfasst, wobei die Dateneinheit (152, 154, 156; 550) ferner mindestens zwei verschiedene Kommunikationsmittel umfasst, wobei die mindestens zwei Kommunikationsmittel in mindestens einem Teil eines geographischen Bereichs, in dem sich die mindestens eine Dateneinheit (152, 154, 156; 550) befindet, eine sich überschneidende Verfügbarkeit aufweisen,
**dadurch gekennzeichnet, dass**
das Verfahren die Schritte umfasst, dass in jeder Dateneinheit (152, 154, 156; 550):
- die mindestens zwei Kommunikationsmittel initiiert werden;
- ein bevorzugtes Kommunikationsmittel ermittelt wird;
- eine Verfügbarkeit der Kommunikationsmittel ermittelt wird;
- ein momentanes Kommunikationsmittel aus einem der mindestens zwei Kommunikationsmittel ausgewählt wird, und zwar in Abhängigkeit von: dem ermittelten bevorzugten Kommunikationsmittel und der Verfügbarkeit der Kommunikationsmittel;
- ein Informationstransfer zu dem zentralen Server (160, 260) mittels des momentanen Kommunikationsmittels bereitgestellt wird;
- ein Typ von Informationstransfer klassifiziert wird;
und wobei in dem Schritt des Auswählens eines momentanen Kommunikationsmittels das Auswählen auch in Abhängigkeit von der Klassifizierung des Typs von bereitzustellendem Informationstransfer erfolgt.

2. Verfahren nach Anspruch 1,
**dadurch gekennzeichnet, dass**
die Eingabe/Ausgabeschnittstelle ferner verwendet wird, um externe Stimuli zu erzeugen.

3. Verfahren nach Anspruch 1 oder 2,
**dadurch gekennzeichnet, dass**
das Verfahren ferner den Schritt umfasst, dass
- der zentrale Server einen Informationstransfer zu mindestens einer Anwendung eines Endgeräts eines Teilnehmers mittels eines weiteren Kommunikationsnetzes bereitstellt.

4. Verfahren nach Anspruch 3,
**dadurch gekennzeichnet, dass**
in dem Schritt des Ermittelns einer Verfügbarkeit der Kommunikationsmittel die Ermittlung auch in Abhängigkeit von der Klassifizierung des Typs von bereitzustellendem Informationstransfer erfolgt.

5. Verfahren nach einem der Ansprüche 1 bis 4,
**dadurch gekennzeichnet, dass**
der Schritt des Klassifizierens eines Typs von Informationstransfer den Unterschritt umfasst, dass
- eine maximal zulässige Verzögerung vor dem Bereitstellen des Informationstransfers ermittelt wird.

6. Verfahren nach Anspruch 5,
**dadurch gekennzeichnet, dass**
der Schritt des Ermittelns einer Verfügbarkeit der Kommunikationsmittel die Unterschritte umfasst, dass
- momentan nicht funktionale Kommunikationsmittel ermittelt werden;
- vorhergesagt wird, welches der momentan nicht funktionalen Kommunikationsmittel innerhalb der ermittelten maximal zulässigen Verzögerung des klassifizierten Typs von bereitzustellendem Informationstransfer ein funktionales Kommunikationsmittel sein wird.

7. Verfahren nach einem der Ansprüche 1 bis 6,
**dadurch gekennzeichnet, dass**
der Schritt des Klassifizierens eines Typs von Informationstransfer den Unterschritt umfasst, dass
- eine Menge an zu transferierender Information ermittelt wird.

8. Verfahren nach Anspruch 7,
**dadurch gekennzeichnet, dass**
der Schritt des Ermittelns einer Verfügbarkeit der Kommunikationsmittel den Unterschritt umfasst, dass
- ermittelt wird, ob die Kommunikationsmittel mit der ermittelten Menge an zu transferierender Information kompatibel sind.

9. Verfahren nach einem der Ansprüche 1 bis 8,
**dadurch gekennzeichnet, dass**
in dem Schritt des Ermittelns eines bevorzugten Kommunikationsmittels die Ermittlung auch in Abhängigkeit von der Klassifizierung des Typs von bereitzustellendem Informationstransfer erfolgt.

10. Verfahren nach einem der Ansprüche 1 - 9,
**dadurch gekennzeichnet, dass**
der Schritt des Initiierens der mindestens zwei Kommunikationsmittel die Unterschritte umfasst, dass
- die Kommunikationsmittel-Hardware initialisiert wird;
- ein Standard-Dateneinheitsprofil aktiviert wird;
- ein Informationstransfer eines momentanen Dateneinheitsprofils angefordert wird.

11. Verfahren nach einem der Ansprüche 1 - 10,
**dadurch gekennzeichnet, dass**
der Schritt des Ermittelns einer Verfügbarkeit der Kommunikationsmittel die Unterschritte umfasst, dass
- zulässige Kommunikationsmittel ermittelt werden;
- funktionale Kommunikationsmittel ermittelt werden.

12. Verfahren nach Anspruch 11,
**dadurch gekennzeichnet, dass**
der Unterschritt des Ermittelns funktionaler Kommunikationsmittel die Unterschritte umfasst, dass
- momentan funktionale Kommunikationsmittel ermittelt werden;
- eine wahrscheinliche Zeitdauer einer anhaltenden Funktionalität der momentan funktionalen Kommunikationsmittel vorhergesagt wird.

13. Verfahren nach einem der Ansprüche 11 - 12,
**dadurch gekennzeichnet, dass**
der Unterschritt des Ermittelns funktionaler Kommunikationsmittel die Unterschritte umfasst, dass
- momentan nicht funktionale Kommunikationsmittel ermittelt werden;
- eine wahrscheinliche Zeitdauer bis zur Funktionalität der momentan nicht funktionalen Kommunikationsmittel vorhergesagt wird.

14. Verfahren nach einem der Ansprüche 1 - 13,
**dadurch gekennzeichnet, dass**
in dem Schritt des Ermittelns eines bevorzugten Kommunikationsmittels die Ermittlung auch in Abhängigkeit von einer Menge an bereitzustellendem Informationstransfer erfolgt.

15. Verfahren nach einem der Ansprüche 1 - 14,
**dadurch gekennzeichnet, dass**
in dem Schritt des Ermittelns eines bevorzugten Kommunikationsmittels die Ermittlung auch in Abhängigkeit von Kosten des Bereitstellens eines Informationstransfers mittels jedes der mindestens zwei Kommunikationsmittel erfolgt.

16. Verfahren nach einem der Ansprüche 1 - 15,
**dadurch gekennzeichnet, dass**
in dem Schritt des Ermittelns eines bevorzugten Kommunikationsmittels die Ermittlung auch in Abhängigkeit von einer Informationstransferrate jedes der mindestens zwei Kommunikationsmittel erfolgt.

17. Verfahren nach einem der Ansprüche 1 - 16,
**dadurch gekennzeichnet, dass**
in dem Schritt des Ermittelns eines bevorzugten Kommunikationsmittels die Ermittlung auch in Abhängigkeit von einer Zeit der jeweiligen Dateneinheiten erfolgt.

18. Verfahren nach einem der Ansprüche 1 - 17,
**dadurch gekennzeichnet, dass**
in dem Schritt des Ermittelns eines bevorzugten Kommunikationsmittels die Ermittlung auch in Abhängigkeit von einer Zeit des zentralen Servers erfolgt.

19. Datenerfassungs- oder -bereitstellungseinheit zum Anbringen an einem mobilen Träger, die ausgestaltet ist, um einen Informationstransfer zu einem zentralen Server (160, 260) bereitzustellen, wobei die Dateneinheit (152, 154, 156; 550) eine Eingabe/Ausgabeschnittstelle (554) zumindest für eine lokale Datenerfassung von gemessenen Werten, wie beispielsweise Position und/oder Zustand, für den Informationstransfer umfasst, wobei die Dateneinheit (152, 154, 156; 550) ferner mindestens zwei verschiedene Kommunikationsmittel umfasst, wobei die mindestens zwei Kommunikationsmittel in mindestens einem Teil eines geographischen Bereichs, in dem sich die Dateneinheit (152, 154, 156; 550) befindet, eine sich überschneidende Verfügbarkeit aufweisen,
**dadurch gekennzeichnet, dass**
die Dateneinheit (152, 154, 156; 550) umfasst:
- ein Initiierungsmittel, das ausgestaltet ist, um die mindestens zwei Kommunikationsmittel zu initiieren;
- ein erstes Ermittlungsmittel, das ausgestaltet ist, um ein bevorzugtes Kommunikationsmittel zu ermitteln;
- ein zweites Ermittlungsmittel, das ausgestaltet ist, um eine Verfügbarkeit der Kommunikationsmittel zu ermitteln;
- ein Auswahlmittel, das ausgestaltet ist, um ein momentanes Kommunikationsmittel aus einem der mindestens zwei Kommunikationsmittel auszuwählen, und zwar in Abhängigkeit von: dem ermittelten bevorzugten Kommunikationsmittel und der Verfügbarkeit der Kommunikationsmittel;
- ein Bereitstellungsmittel, das ausgestaltet ist, um einen Informationstransfer zu dem zentralen Server (160, 260) mittels des momentanen Kommunikationsmittels bereitzustellen;
- ein Klassifizierungsmittel, das ausgestaltet ist, um einen Typ von Informationstransfer zu klassifizieren;
und dadurch, dass das Auswahlmittel auch ausgestaltet ist, um in Abhängigkeit von der Klassifizierung des Typs von bereitzustellendem Informationstransfer auszuwählen.

20. Dateneinheit nach Anspruch 19,
**dadurch gekennzeichnet, dass**
die Eingabe/Ausgabeschnittstelle ferner zum Erzeugen externer Stimuli verwendet wird.

21. Dateneinheit nach einem der Ansprüche 19 oder 20,
**dadurch gekennzeichnet, dass**
das Klassifizierungsmittel ausgestaltet ist, um eine maximal zulässige Verzögerung vor der Bereitstellung des Informationstransfers zu ermitteln und/oder eine Menge an zu transferierender Information zu ermitteln.

22. Dateneinheit nach Anspruch 19 - 21,
**dadurch gekennzeichnet, dass**
die Ermittlung in dem zweiten Ermittlungsmittel auch in Abhängigkeit von der Klassifizierung des Typs von bereitzustellendem Informationstransfer erfolgt.

23. Dateneinheit nach einem der Ansprüche 19 - 22,
**dadurch gekennzeichnet, dass**
das erste Ermittlungsmittel auch ausgestaltet ist, um in Abhängigkeit von der Klassifizierung des Typs von bereitzustellendem Informationstransfer ein bevorzugtes Kommunikationsmittel zu ermitteln.

24. Dateneinheit nach einem der Ansprüche 19 - 23,
**dadurch gekennzeichnet, dass**
das Initiierungsmittel ausgestaltet ist, um die Kommunikationsmittel-Hardware zu initialisieren, ein Standard-Dateneinheitsprofil zu aktivieren und einen Informationstransfer eines momentanen Dateneinheitsprofils anzufordern.

25. Dateneinheit nach einem der Ansprüche 19 - 24,
**dadurch gekennzeichnet, dass**
das zweite Ermittlungsmittel ausgestaltet ist, um zulässige Kommunikationsmittel zu ermitteln und funktionale Kommunikationsmittel zu ermitteln.

26. Dateneinheit nach einem der Ansprüche 19 - 25,
**dadurch gekennzeichnet, dass**
das erste Ermittlungsmittel ausgestaltet ist, um ein bevorzugtes Kommunikationsmittel zu ermitteln, und zwar in Abhängigkeit von einem oder mehreren von: einer Menge an bereitzustellendem Informationstransfer; Kosten des Bereitstellens des Informationstransfers mittels jedes der mindestens zwei Kommunikationsmittel; einer Informationstransferrate jedes der mindestens zwei Kommunikationsmittel; einer Zeit der Dateneinheit; einer Zeit des zentralen Servers.

27. Verfahren zum Bereitstellen eines Informationstransfers von einem zentralen Server (160, 260) zu mindestens einer Dateneinheit (152, 154, 156; 550), wobei die mindestens eine Dateneinheit (152, 154, 156; 550) an einem mobilen Träger angebracht ist und eine Eingabe/Ausgabeschnittstelle (554) zumindest für eine lokale Datenerfassung von gemessenen Werten, wie beispielsweise Position und/oder Zustand, für den Informationstransfer umfasst, wobei der zentrale Server (160, 260) mindestens zwei verschiedene Kommunikationsmittel umfasst, wobei die mindestens zwei Kommunikationsmittel in mindestens einem Teil eines geographischen Bereichs, in dem sich die mindestens eine Dateneinheit (152, 154, 156; 550) befindet, eine sich überschneidende Verfügbarkeit aufweisen,
**dadurch gekennzeichnet, dass**
das Verfahren die Schritte umfasst, dass in dem zentralen Server (160, 260):
- die mindestens zwei Kommunikationsmittel initiiert werden;
- ein bevorzugtes Kommunikationsmittel ermittelt wird;
- eine Verfügbarkeit der Kommunikationsmittel ermittelt wird;
- ein momentanes Kommunikationsmittel aus einem der mindestens zwei Kommunikationsmittel ausgewählt wird, und zwar in Abhängigkeit von: dem ermittelten bevorzugten Kommunikationsmittel und der Verfügbarkeit der Kommunikationsmittel;
- ein Informationstransfer zu der mindestens einen Dateneinheit (152, 154, 156; 550) mittels des momentanen Kommunikationsmittels bereitgestellt wird;
- ein Typ von Informationstransfer klassifiziert wird;
und dadurch, dass in dem Schritt des Auswählens eines momentanen Kommunikationsmittels das Auswählen auch in Abhängigkeit von der Klassifizierung des Typs von bereitzustellendem Informationstransfer erfolgt.

28. Verfahren nach Anspruch 27,
**dadurch gekennzeichnet, dass**
das Verfahren ferner den Schritt umfasst, dass
- der zentrale Server einen Informationstransfer von mindestens einer Anwendung eines Endgeräts eines Teilnehmers mittels eines weiteren Kommunikationsnetzes bereitstellt.

29. Verfahren nach einem der Ansprüche 27 - 28,
**dadurch gekennzeichnet, dass**
das Verfahren ferner die Schritte umfasst, dass
- Dateneinheitsprofilparameter mit momentanen Parametern verglichen werden;
- ermittelt wird, ob ein oder mehrere Dateneinheitsprofilparameter aktualisiert werden muss oder müssen;
- wenn ermittelt wird, dass ein oder mehrere Dateneinheitsprofilparameter aktualisiert werden muss oder müssen, ein Informationstransfer eines Dateneinheitsprofils mit momentanen Parametern zu mindestens einer Dateneinheit angefordert wird.

30. Zentraler Server (160, 260), ausgestaltet, um einen Informationstransfer zu mindestens einer Dateneinheit (152, 154, 156; 550) bereitzustellen, wobei die mindestens eine Dateneinheit (152, 154, 156; 550) an einem mobilen Träger angebracht ist und eine Eingabe/Ausgabeschnittstelle (554) zumindest für eine lokale Datenerfassung von gemessenen Werten, wie beispielsweise Position und/oder Zustand, umfasst, wobei der zentrale Server (160, 260) mindestens zwei verschiedene Kommunikationsmittel umfasst, wobei die mindestens zwei Kommunikationsmittel in mindestens einem Teil eines geographischen Bereichs, in dem sich die mindestens eine Dateneinheit (152, 154, 156; 550) befindet, eine sich überschneidende Verfügbarkeit aufweisen,
**dadurch gekennzeichnet, dass**
der zentrale Server (160, 260) umfasst:
- ein Initiierungsmittel, das ausgestaltet ist, um die mindestens zwei Kommunikationsmittel zu initiieren;
- ein erstes Ermittlungsmittel, das ausgestaltet ist, um ein bevorzugtes Kommunikationsmittel zu ermitteln;
- ein zweites Ermittlungsmittel, das ausgestaltet ist, um eine Verfügbarkeit der Kommunikationsmittel zu ermitteln;
- ein Auswahlmittel, das ausgestaltet ist, um ein momentanes Kommunikationsmittel aus einem der mindestens zwei Kommunikationsmittel auszuwählen, und zwar in Abhängigkeit von: dem ermittelten bevorzugten Kommunikationsmittel und der Verfügbarkeit der Kommunikationsmittel;
- ein Bereitstellungsmittel, das ausgestaltet ist, um einen Informationstransfer zu der mindestens einen Dateneinheit (152, 154, 156; 550) mittels des momentanen Kommunikationsmittels bereitzustellen;
- ein Klassifizierungsmittel, das ausgestaltet ist, um einen Typ von Informationstransfer zu klassifizieren;
und dadurch, dass das Auswahlmittel auch ausgestaltet ist, um in Abhängigkeit von der Klassifizierung des Typs von bereitzustellendem Informationstransfer auszuwählen.

31. Zentraler Server nach Anspruch 30,
**dadurch gekennzeichnet, dass**
der zentrale Server ferner umfasst:
- ein Komparatormittel, das ausgestaltet ist, um Dateneinheitsprofilparameter mit momentanen Parametern zu vergleichen;
- ein Ermittlungsmittel, das ausgestaltet ist, um zu ermitteln, ob ein oder mehrere Dateneinheitsprofilparameter aktualisiert werden muss oder müssen;
- ein Anforderungsmittel, das ausgestaltet ist, um einen Informationstransfer eines Dateneinheitsprofils mit momentanen Parametern zu mindestens einer Dateneinheit anzufordern, wenn ermittelt wird, dass ein oder mehrere Dateneinheitsprofilparameter aktualisiert werden muss oder müssen.

32. Informationstransfersystem, umfassend die Dateneinheit nach Anspruch 19 - 26 und einen zentralen Server nach Anspruch 30 - 31.

## Revendications

1. Procédé de transfert d'informations à partir d'au moins une unité de données (152, 154, 156 ; 550) vers un serveur central (160, 260), ladite au moins une unité de données (152, 154, 155 ; 550) étant montée sur un support mobile et comportant une interface d'entrée-sortie (554) au moins pour la collecte de données locales de valeurs mesurées telles que la position et/ou les conditions pour ledit transfert d'informations, l'unité de données (152, 154, 156 ; 550) comportant en outre au moins deux moyens de communication différents, les au moins deux moyens de communication présentant une disponibilité de chevauchement dans au moins une partie d'une zone géographique dans laquelle l'au moins une unité de données (152, 154, 156 ; 550) est située,
**caractérisé en ce que** le procédé comprend les étapes suivantes dans chaque unité de données (152, 154, 156 ; 550) :
• initialiser les au moins deux moyens de communication ;
• déterminer un moyen de communication préféré ;
• déterminer la disponibilité des moyens de communication,
• choisir un moyen de communication en cours à partir d'un des au moins deux moyens de communication, en fonction du moyen de communication préféré déterminé et de la disponibilité des moyens de communication ;
• transférer des informations au serveur central (160, 260) par le moyen de communication en cours ;
• classifier le type de transfert d'informations ;
et **en ce qu'**au cours de l'étape de choix d'un moyen de communication en cours, le choix est également effectué en fonction de la classification du type de transfert d'informations à effectuer.

2. Procédé selon la revendication 1, **caractérisé en ce que** ladite interface d'entrée-sortie est en outre utilisée pour générer des stimuli externes.

3. Procédé selon la revendication 1 ou 2, **caractérisé en ce que** le procédé comprend en outre l'étape de :
• transférer des informations par le serveur central à au moins une application d'un terminal d'un abonné au moyen d'un réseau de communication supplémentaire.

4. Procédé selon la revendication 3, **caractérisé en ce qu'**au cours de l'étape de détermination de la disponibilité des moyens de communication, la détermination est également effectuée en fonction de la classification du type de transfert d'informations à effectuer.

5. Procédé selon l'une quelconque des revendications 1 à 4, **caractérisé en ce que** l'étape de classification du type de transfert d'informations comprend la sous-étape de :
• déterminer un délai maximal allouable avant que le transfert d'informations soit effectué.

6. Procédé selon la revendication 5, **caractérisé en ce que** l'étape de détermination de la disponibilité des moyens de communication comprend les sous-étapes de :
• déterminer des moyens de communication en cours et non-fonctionnels ;
• prédire lequel des moyens de communication en cours et non-fonctionnels sera un moyen de communication fonctionnel dans le délai maximal prédétermine allouable du type classifié de transfert d'informations à effectuer.

7. Procédé selon l'une quelconque des revendications 1 à 6, **caractérisé en ce que** l'étape de classification du type de transfert d'informations comprend la sous-étape de :
• déterminer une quantité d'informations à transférer.

8. Procédé selon la revendication 7, **caractérisé en ce que** l'étape de détermination de la disponibilité des moyens de communication comprend la sous-étape de :
• déterminer la compatibilité du moyen de communication avec la quantité déterminée d'informations à transférer.

9. Procédé selon l'une quelconque des revendications 1 à 8, **caractérisé en ce qu'**au cours de l'étape de détermination d'un moyen de communication préféré, la détermination est également effectuée en fonction de la classification du type de transfert d'informations à effectuer.

10. Procédé selon l'une quelconque des revendications 1 à 9, **caractérisé en ce que** l'étape d'initialisation des au moins deux moyens de communication comprend les sous-étapes de :
• initialiser le circuit du moyen de communication ;
• activer un profil d'unités de données par défaut ;
• demander un transfert d'informations d'un profil d'unité de données en cours.

11. Procédé selon l'une quelconque des revendications 1 à 10, **caractérisé en ce que** l'étape de détermination de la disponibilité des moyens de communication comprend les sous-étapes de :
• déterminer des moyens de communication allouables ;
• déterminer des moyens de communication fonctionnels.

12. Procédé selon la revendication 11, **caractérisé en ce que** la sous-étape de détermination des moyens de communication fonctionnels comprend les sous-étapes de :
• déterminer des moyens de communication en cours et fonctionnels ;
• prédire le moment probable de mise en fonction continue des moyens de communication en cours et fonctionnels.

13. Procédé selon l'une quelconque des revendications 11 à 12, **caractérisé en ce que** la sous-étape de détermination des moyens de communication fonctionnels comprend les sous-étapes de :
• déterminer des moyens de communication en cours et non-fonctionnels ;
• prédire le moment probable de mise en fonction des moyens de communication en cours et non-fonctionnels.

14. Procédé selon l'une quelconque des revendications 1 à 13, **caractérisé en ce qu'**au cours de l'étape de détermination d'un moyen de communication préféré, la détermination est également effectuée en fonction de la quantité d'informations à transférer.

15. Procédé selon l'une quelconque des revendications 1 à 14, **caractérisé en ce qu'**au cours de l'étape de détermination d'un moyen de communication préféré, la détermination est également effectuée en fonction du coût du transfert d'informations par chacun des au moins deux moyens de communication.

16. Procédé selon l'une quelconque des revendications 1 à 15, **caractérisé en ce qu'**au cours de l'étape de détermination d'un moyen de communication préféré, la détermination est également effectuée en fonction du taux de transfert d'informations de chacun des au moins deux moyens de communication.

17. Procédé selon l'une quelconque des revendications 1 à 16, **caractérisé en ce qu'**au cours de l'étape de détermination d'un moyen de communication préféré, la détermination est également effectuée en fonction du temps donné par les unités de données respectives.

18. Procédé selon l'une quelconque des revendications 1 à 17, **caractérisé en ce qu'**au cours de l'étape de détermination d'un moyen de communication préféré, la détermination est également effectuée en fonction du temps donné par le serveur central.

19. Unité de collecte et de fourniture de données prévues à monter sur un support mobile prévu pour transférer des informations vers un serveur central (160, 260), ladite unité de données (152, 154, 356 ; 550) comportant une interface d'entrée-sortie (554) au moins pour la collecte de données locales de valeurs mesurées telles que la position et/ou les conditions pour ledit transfert d'informations, l'unité de données (152, 154, 156 ; 550) comportant en outre au moins deux moyens de communication différents, les au moins deux moyens de communication présentant une disponibilité de chevauchement dans au moins une partie d'une zone géographique dans laquelle l'unité de données (152, 154, 156 ; 550) est située, **caractérisée en ce que** l'unité de données (152, 154, 156 ; 550) comprend :
• un moyen d'initialisation prévu pour initialiser les au moins deux moyens de communication ;
• un premier moyen de détermination prévu pour déterminer un moyen de communication préféré ;
• un second moyen de détermination prévu pour déterminer la disponibilité des moyens de communication ;
• un moyen de sélection prévu pour choisir un moyen de communication en cours à partir d'un des au moins deux moyens de communication, en fonction du moyen de communication préféré déterminé et de la disponibilité des moyens de communication ;
• un moyen prévu pour effectuer le transfert d'informations vers le serveur central (160, 260) par les moyens de communication en cours ;
• un moyen de classification prévu pour classifier le type de transfert d' informations ;
et **en ce que** le moyen de sélection est également prévu pour choisir en fonction de la classification du type de transfert d'informations à effectuer.

20. Unité de données selon la revendication 19, **caractérisée en ce que** ladite interface d'entrée-sortie est en outre utilisée pour générer des stimuli externes.

21. Unité de données selon l'une quelconque des revendications 19 et 20, **caractérisée en ce que** le moyen de classification est prévu pour déterminer un délai maximal allouable avant que le transfert d'informations soit effectué, et/ou déterminer la quantité d' informations à transférer.

22. Unité de données selon la revendication 19 à 21, **caractérisée en ce que** dans le second moyen de détermination, la détermination est également effectuée en fonction de la classification du type de transfert d'informations à effectuer.

23. Unité de données selon l'une quelconque des revendications 19 à 22, **caractérisée en ce que** le premier moyen de détermination est également prévu pour déterminer un moyen de communication préféré en fonction de la classification du type de transfert d'informations à effectuer.

24. Unité de données selon l'une quelconque des revendications 19 à 23, **caractérisée en ce que** le moyen d'initialisation est prévu pour initialiser les circuits des moyens de communication, pour activer un profil d'unité de données prédéfini et pour demander un transfert d'informations d'un profil en cours d'unité de données.

25. Unité de données selon l'une quelconque des revendications 19 à 24, **caractérisée en ce que** le second moyen de détermination est prévu pour déterminer les moyens de communication allouables et pour déterminer les moyens de communication fonctionnels.

26. Unité de données selon l'une quelconque des revendications 19 à 25, **caractérisée en ce que** le premier moyen de détermination est prévu pour déterminer une moyen de communication préféré en fonction d'un ou plusieurs des paramètres de :
• quantité d'informations à transférer ;
• coût du transfert d'informations au moyen de chacun des au moins deux moyens de communication ;
• taux de transfert d'informations de chacun des au moins deux moyens de communication ;
• temps donné par l'unité de données ; et
• temps donné par le serveur central.

27. Procédé de transfert d'informations à partir d'un serveur central (160, 260) vers au moins une unité de données (152, 154, 156 ; 550), ladite au moins une unité de données (152, 154, 156 ; 550) étant montée sur un support mobile et comportant une interface d'entrée-sortie (554) au moins pour la collecte de données locales de valeurs mesurées telles que la position et/ou les conditions pour ledit transfert d'informations, le serveur central (160, 260) comportant au moins deux moyens de communication différents, les au moins deux moyens de communication présentant une disponibilité de chevauchement dans au moins une partie d'une zone géographique dans laquelle l'au moins une unité de données (152, 154, 156 ; 550) est située, **caractérisé en ce que** le procédé comprend les étapes suivantes dans le serveur central (160, 260);
• initialiser les au moins deux moyens de communication ;
• déterminer un moyen de communication préféré ;
• déterminer la disponibilité des moyens de communication ;
• choisir un moyen de communication en cours à partir d'un des au moins deux moyens de communication, en fonction du moyen de communication préféré déterminé et de la disponibilité des moyens de communication ;
• transférer des informations à l'au moins une unité de données (152, 154, 156 ; 550) par le moyen de communication en cours ;
• classifier un type de transfert d'informations ;
et **en ce qu'**au cours de l'étape de choix d'un moyen de communication en cours, le choix est également effectué en fonction de la classification du type de transfert d'informations à effectuer.

28. Procédé selon la revendication 27, **caractérisé en ce que** le procédé comprend en outre l'étape de :
• transférer des informations par le serveur central à partir d'au moins une application d'un terminal d'un abonné au moyen d'un réseau supplémentaire de communication.

29. Procédé selon l'une quelconque des revendications 27 à 28, **caractérisé en ce que** le procédé comprend en outre les étapes de :
• comparer des paramètres de profil d'unité de données avec des paramètres en cours ;
• déterminer la mise à jour d'un ou plusieurs paramètres de profil d'unité de données ;
• si on détermine qu'un ou plusieurs paramètres de profil d'unité de données nécessite(nt) d'être mis à jour, demander alors d'un transfert d'informations d'un profil d'unité de données avec des paramètres en cours vers au moins une unité de données.

30. Serveur central (160, 260) prévu pour effectuer un transfert d'informations vers au moins une unité de données (152, 154, 156 ; 550), ladite au moins une unité de données (152, 154, 156 ; 550) étant montée sur un support mobile et comportant une interface d'entrée-sortie (554) au moins pour la collecte de données locales de valeurs mesurées telles que la position et/ou les conditions, le serveur central (160, 266) comportant au moins deux moyens de communication différents, les au moins deux moyens de communication présentant une disponibilité de chevauchement dans au moins une partie d'une zone géographique dans laquelle l'au moins une unité de données (152, 154, 156 ; 550) est située, **caractérisé en ce que** le serveur central (160, 260) comprend :
• un moyen d'initialisation prévu pour initialiser les au moins deux moyens de communication ;
• un premier moyen de détermination prévu pour déterminer un moyen de communication préféré ;
• un second moyen de détermination prévu pour déterminer la disponibilité des moyens de communication ;
• un moyen de sélection prévu pour choisir un moyen de communication en cours à partir d'un des au moins deux moyens de communication, en fonction du moyen de communication préféré déterminé et de la disponibilité des moyens de communication ;
• un moyen prévu pour effectuer le transfert d'informations vers l'au moins une unité de données (152, 154, 156 ; 550) par les moyens de communication en cours ;
• un moyen de classification prévu pour classifier le type de transfert d'informations ;
et **en ce que** le moyen de sélection est également prévu pour choisir en fonction de la classification du type de transfert d'informations à effectuer.

31. Serveur central selon la revendication 30, **caractérisé en ce que** le serveur central comprend en outre :
• un moyen de comparaison prévu pour comparer les paramètres de profil d'unité de données avec les paramètres en cours ;
• un moyen de détermination prévu pour déterminer la nécessité pour un ou plusieurs paramètres de profil d'unité de données d'être mis à jour ;
• un moyen de requête prévu pour demander un transfert d'informations d'un profil d'unité de données avec des paramètres en cours vers au moins une unité de données si on a déterminé qu'un ou plusieurs paramètres de profil d'unité de données nécessite(nt) d'être mis à jour.

32. Système de transfert d'informations comprenant l'unité de données telle que définie par les revendications 19 à 26 et un serveur central tel que défini par les revendications 30 à 31.
